**Europäisches Patentamt**

**European Patent Office**

**Office européen des brevets**

(11) Numéro de publication: **0 047 212**
**B1**

(12) **FASCICULE DE BREVET EUROPEEN**

(45) Date de publication du fascicule du brevet: **13.02.85**

(51) Int. Cl.⁴: **B 64 G 1/64,** F 16 H 21/54

(21) Numéro de dépôt: **81401356.1**

(22) Date de dépôt: **27.08.81**

(54) **Dispositif d'éloignement combinant un mouvement de translation et un mouvement de rotation, notamment pour un équipement sur un engin spatial.**

(30) Priorité: **02.09.80 FR 8018919**

(43) Date de publication de la demande:
**10.03.82 Bulletin 82/10**

(45) Mention de la délivrance du brevet:
**13.02.85 Bulletin 85/07**

(84) Etats contractants désignés:
**CH DE GB IT LI NL SE**

(56) Documents cités:
**FR-A-1 418 014**
**FR-A-2 361 583**

(73) Titulaire: **SOCIETE NATIONALE INDUSTRIELLE AEROSPATIALE**
**37 boulevard de Montmorency**
**F-75016 Paris Cedex 16 (FR)**

(72) Inventeur: **Labruyere, Gilles**
**Résidence Le Malaga rue Janvier Pasero**
**F-06 210 Mandelieu (FR)**

(74) Mandataire: **Rinuy, Guy et al**
**14, Avenue de la Grande Armée**
**F-75017 Paris (FR)**

Courier Press, Leamington Spa, England.

## Description

La présente invention concerne un dispositif mécanique permettant d'assurer l'éloignement et l'orientation d'un élément par rapport à un autre.

D'une façon générale, le dispositif suivant l'invention peut avantageusement être appliqué au domaine des télémanipulateurs.

D'une façon plus particulière, dans le domaine des satellites, le dispositif suivant l'invention peut être appliqué à la mise en place de divers organes, principalement de panneaux solaires, étant à noter que le problème que l'invention permet de résoudre est celui de la production d'électricité d'origine solaire durant le parcours de l'orbite de transfert.

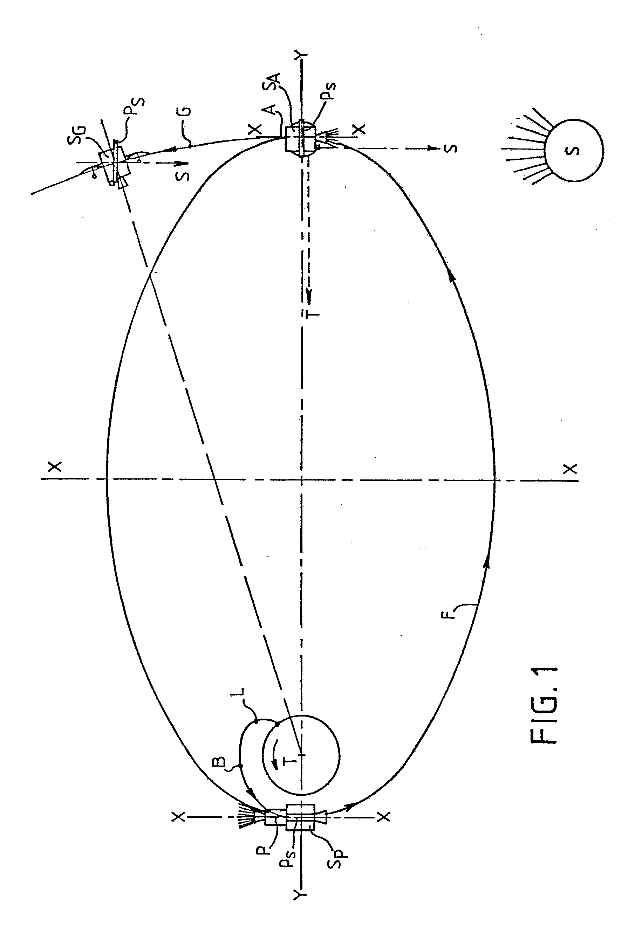

Pour bien montrer et permettre de comprendre l'intérêt du dispositif selon l'invention, on se référera à la figure 1 des dessins annexés qui est un schéma explicatif parfaitement classique représentant la projection sur le plan équatorial des trajectoires des différentes phases de la mise en orbite géostationnaire d'un satellite ainsi que la situation relative, par rapport à ce dernier, de la terre et du soleil.

Sans entrer dans les détails pour l'instant, on rappellera simplement que sur cette figure T désigne la terre; S, le soleil; L, la phase de lancement; B, l'orbite basse; P, la zone où s'opère la propulsion de périgée; F, l'orbite de transfert; A, la zone où s'opère la propulsion d'apogée, et G, l'orbite géostationnaire.

Par ailleurs, on a désigné, sur cette figure, par SP le satellite lorsqu'il reçoit la propulsion de périgée; par SA, le même satellite, lorsqu'il reçoit la propulsion d'apogée, et par SG, toujours ce même satellite, lorsqu'il a été injecté sur l'orbite géostationnaire G.

On rappellera par ailleurs que l'orientation initiale du satellite en position SP au début du parcours de l'orbite de transfert F est déterminée par la phase de propulsion du périgée (zone P, intermédiaire entre B et F).

Durant le transfert F, l'axe XX du satellite doit conserver la même orientation absolue de manière que le moteur d'apogée soit bien orienté lors de la propulsion d'apogée pour la mise en orbite géostationnaire (zone A, intermédiaire entre F et G). La direction du propulseur d'apogée XX doit être perpendiculaire au grand axe YY de l'orbite elliptique de transfert F. Le contrôle de cette orientation peut être passif par mise en spin lors de la propulsion de périgée P ou actif par stabilisation suivant trois axes.

Pour les satellites spinnés dont les cellules solaires sont alors à la périphérie du corps du satellite, on peut utiliser une orbite de transfert ayant son grand axe YY en direction du soleil, pour ensoleiller au mieux le générateur solaire qui est alors cylindrique.

Dans le cas d'un satellite stabilisé suivant trois axes, l'asservissement est basé sur la détection de la direction de la terre T et de celle du soleil S. Pour obtenir une bonne précision de l'orientation lors de l'injection sur l'orbite géostationnaire, il est souhaitable que ces deux directions fassent entre elles un angle voisin d'un angle droit.

Il résulte de ces différentes considérations que la direction du soleil doit être voisine de la perpendiculaire du grand axe YY de l'ellipse de transfert F, et donc sensiblement dans la direction de l'axe des propulseurs d'apogée, ce qui se produit au moment des équinoxes.

En conséquence, dans cette configuration géométrique, les panneaux solaires PS doivent être sensiblement orthogonaux à l'axe du propulseur, lequel est en général confondu avec l'axe de symétrie XX du satellite pour des raisons d'encombrement et d'équilibre en phase propulsée.

D'autre part, compte tenu de leur grand encombrement, les conteneurs de panneaux solaires PS dépliables souples sont disposés, lors des phases propulsées, parallèlement à l'axe XX du satellite. Donc, pour déplier utilement les panneaux solaires durant la phase de transfert F entre P et A, il faut faire tourner les conteneurs PS d'un quart de tour, suivant la binormale à la trajectoire.

De plus, pour éviter les ombres portées sur les cellules solaires, il est souhaitable de produire simultanément un écartement des conteneurs par rapport au corps du satellite, comme on le verra en détail plus loin.

La réalisation de ces deux mouvements doit être effectuée après la fin de la propulsion du périgée.

Sans entrer, pour l'instant, dans des détails techniques qui seront développés ultérieurement, on rappellera succinctement que lors des différentes phases de sa mise sur orbite géostationnaire le satellite occupe différentes configurations, à savoir:

— la configuration de périgée en SP, pour laquelle les panneaux solaires ont repliés dans leurs conteneurs qui sont disposés parallèlement à l'axe longitudinal XX du satellite:

— la configuration de l'orbite de transfert et de la propulsion d'apogée SA, pour laquelle les panneaux solaires peuvent être partiellement déployés; ils se trouven alors dans un plan normal à l'axe longitudinal XX du satellite; et

— la configuration géostationnaire SG, pour laquelle les panneaux solaires sont entièrement dépliés et peuvent être orientés de manière que la direction du soleil S soit sensiblement normale à leur surface.

On constate que l'orientation des panneaux solaires, d'un véhicule spatial en orbite de transfert F, de l'orbite basse B vers l'orbite géostationnaire G, présente un certain nombre de difficultés.

Actuellement, la technologie connue comporte des dispositifs d'éloignement constitués par l'association d'une structure articulée et d'un dispositif de conjugaison qui impose les lois d'eloignement.

Dans un cas, la structure est constituée par un ensemble plan de quatre barres articulées en parallélogramme. La déformation du parallélogramme est contrôlée par un couple d'engrenages cylindriques disposé à l'articulation des deux premières barres de la structure. L'extrémité libre du parallélogramme subit une translation dans son plan.

Dans d'autres cas, l'éloignement est obtenu par un ou deux éléments ayant leurs articulations parallèles qui ne peuvent produire qu'une translation.

De tels dispositifs ne permettent aucune orientation hors de leur plan: ils ne permettent pas, en particulier, de rotation autour de l'axe de translation.

Il faut noter que pour obtenir le mouvement de rotation il n'est pas possible d'utiliser à ce moment-là le système de rotation normalement prévu pour la vie opérationnelle du satellite et qui permet le mouvement angulaire des panneaux solaires par rapport au corps du satellite.

En effet les sollicitations mécaniques produites au cours de la mise en orbite géostationnaire sont trop élevées par rapport à son dimensionnement et ce système n'est libéré qu'après la mise à poste géostationnaire.

On connaît déjà des dispositifs de transformation réciproque entre un mouvement de translation et un mouvement de rotation, notamment d'après le brevet FR—2.361.583 qui propose un jeu de trois disques coaxiaux reliés en leur périphérie par des éléments allongés de liaison coopérant avec des moyens de guidage cylindrique; l'écartement entre les disques extrêmes est maintenu fixe et ces disques subissent une rotation relative sous l'effet d'un mouvement combiné de rotation et de translation du disque médian. Un tel dispositif présente cependant un encombrement constant ce qui, contrairement à l'invention, le rend impropre à assurer l'éloignement d'un élément vis-à-vis d'un support.

La présente invention permet de résoudre le problème consistant à assurer simultanément l'écartement et la rotation du conteneur, d'une manière simple.

D'une manière générale, le dispositif de l'invention permettant d'assurer simultanément l'éloignement et la rotation d'un élément par rapport à un support, notamment l'éloignement et l'orientation d'un équipment sur un engin spatial, est caractérisé par la combinaison d'un mécanisme de conjugaison à engrenages coniques dont l'engrenage central peut être rendu solidaire du support, avec une structure déformable reliant ledit élément au mécanisme de conjugaison, ladite structure déformable étant constituée d'au moins deux groupes de deux barres articulées et disposées de manière à former un ensemble d'au moins deux pyramides opposées par leurs bases, ledit mécanisme occupant le sommet de la pyramide proche du support et chacune des barres aboutissant audit mécanisme étant solidaire d'un engrenage conique secondaire, ces engrenages secondaires étant reliés entre eux par une pièce de liaison mécanique en sorte de pouvoir rouler ensemble sur l'engrenage central entour de l'axe de ce dernier.

Dans un dispositif préféré conforme à l'invention les deux mouvements d'éloignement et de rotation sont obtenus par la combinaison avec la structure articulée d'un mécanisme de conjugaison à trois engrenages coniques orthogonaux dont l'engrenage central est rendu solidaire du satellite et dont l'axe, orthogonal à la paroi du satellite, est perpendiculaire à l'axe, commun, des deux engrenages secondaires, chacun de ceux-ci étant solidaire d'une des premières barres de la structure articulée et lié, par ailleurs, au satellite à l'aide d'une pièce de liaison mécanique commune aux deux engrenages et pivotante autour de l'axe de l'engrenage central, de telle sorte que la rotation desdits engrenages secondaires en sens inverses produise conjointement, la rotation de la structure et l'éloignement du conteneur, dans un sens et vice versa, dans l'autre sens.

D'autres caractéristiques, avantages et particularités de la présente invention ressortiront de la description qui en est donnée ci-après en référence aux dessins très schématiques annexés représentant, à titre d'exemple préférentiel non limitatif une forme de réalisation possible de ladite invention.

Sur ces dessins:

— la figure 1, comme on l'a vu précédemment, est un schéma explicatif représentant la projection, sur le plan équatorial des trajectoires des différentes phases de la mise en orbite géostationnaire d'un satellite ainsi que la situation relative de la terre et du soleil par rapport audit satellite, ce schéma permettant, entre autres, d'expliciter l'intérêt du dispositif d'éloignement et d'orientation pour panneau solaire conforme à l'invention;

— la figure 2 est une vue en perspective à plus grande échelle représentant le satellite en configuration de périgée;

— la figure 3 est une vue en perspective du même satellite représenté, cette fois, en configuration de transfert et d'apogée;

— la figure 4 est une vue en perspective du même satellite représenté, cette fois en configuration géostationnaire;

— la figure 5 est une vue de détail à grande échelle représentant de manière très simplifiée et en perspective, le principe du mécanisme d'inversion de mouvement associé aux deux premières barres de la structure articulée; et

— la figure 6 est une vue en perspective, à plus petite échelle, représentant le mécanisme d'inversion de la figure 5 combiné avec une structure articulée en forme de parallélogramme et portant le conteneur du panneau solaire, l'ensemble étant représenté en position sur le satellite, les proportions réelles respectives n'étant pas respectées sur ladite figure.

On a vu précédemment d'une façon générale que, lors des différentes phases de sa mise en orbite géostationnaire G, le satellite devait occuper différentes configurations en fonction de contraintes diverses et que l'orientation des panneaux solaires présentait un certain nombre de difficultés à résoudre.

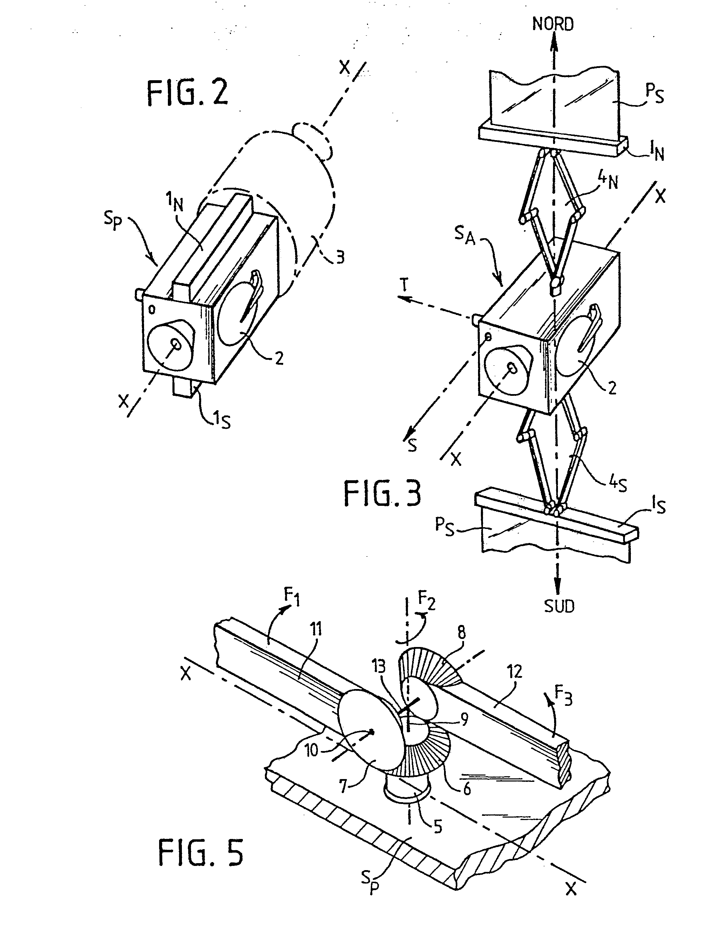

On va reprendre maintenant en détail cette question en se référant successivement aux figures 2, 3 et 4.

La figure 2 représente le satellite dans la configuration de périgée SP.

Dans cette configuration, les panneaux solaires sont repliés dans leurs conteneurs 1N et 1S qui sont disposés respectivement sur les faces nord et sud du satellite, parallèlement à l'axe longitudinal XX du satellite. Les réflecteurs d'antenne 2 sont de même en configuration repliée ou rétractée. Ces positions repliées permettent d'inscrire l'ensemble dans un diamètre minimal pour le logement du satellite sur le lanceur 3 représenté en trait mixte. Cette configuration rend le satellite moins sensible aux accélérations produites (voir figure 1) lors du lancement L et de la propulsion de périgée P qui permet de faire quitter l'orbite basse circulaire B pour atteindre l'orbite de transfert F.

La figure 3 représente le satellite dans la configuration SA de l'orbite de transfert F et de la propulsion d'apogée A qui ne produit qu'une accélération faible. Pour cette raison, la configuration est réalisée juste après la propulsion de périgée P. Pour ce faire, et après fonctionnement des mécanismes d'éloignement-rotation 4N et 4S des conteneurs 1N et 1S, les panneaux solaires PS peuvent être partiellement déployés. Ces derniers se trouvent alors conenus dans un plan normal à l'axe longitudinal XX du satellite qui se trouve lui-même dirigé vers le soleil S.

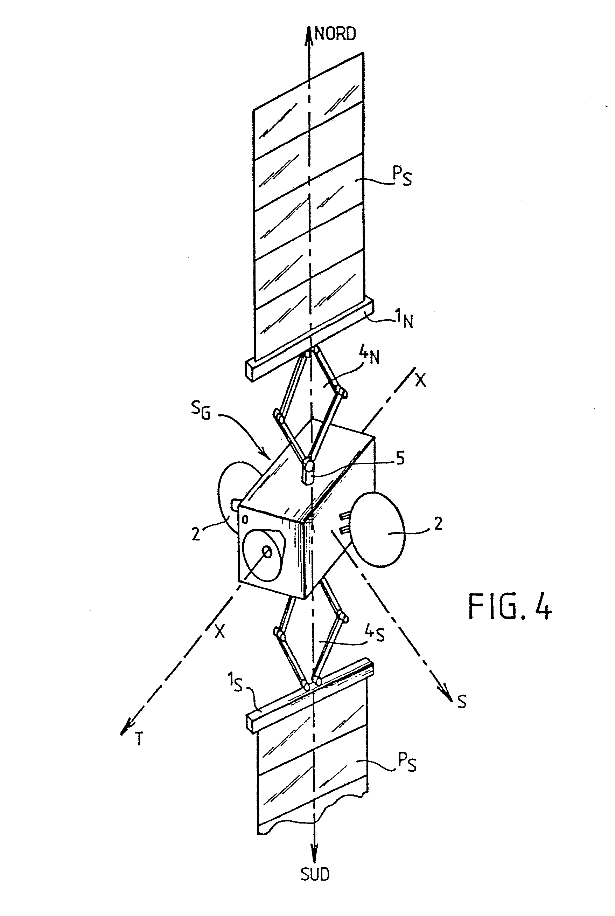

La figure 4 représente le satellite dans la configuration géostationnaire SG avec les panneaux solaires PS entièrement dépliés. Les systèmes de pivotement 5 des panneaux, sur lesquels sont montés les mécanismes d'éloignement-rotation 4N et 4S, sont déverrouillés et les panneaux solaires PS peuvent alors être orientés de manière que la direction du soleil S soit sensiblement normale à leur surface. Par ailleurs, les réflecteurs d'antenne 2 sont également déployés et leur orientation en direction de la terre T est assurée par l'orientation même du corps du satellite.

Pour que cet ensemble de manoeuvres soit possible, il est nécessaire que l'axe longitudinal des panneaux solaires PS, qui est également celui autour duquel s'oriente le corps du satellite, soit dirigé suivant la binormale à la trajectoire géostationnaire, c'est-à-dire suivant l'axe NORD-SUD.

Dans le but de limiter les perturbations produites sur l'orientation du corps du satellite lors des mouvements éloignement-rotation des conteneurs 1N et 1S de panneaux solaires, il peut être avantageux de communiquer des rotations de signe inverse aux conteneurs nord et sud 1N et 1S.

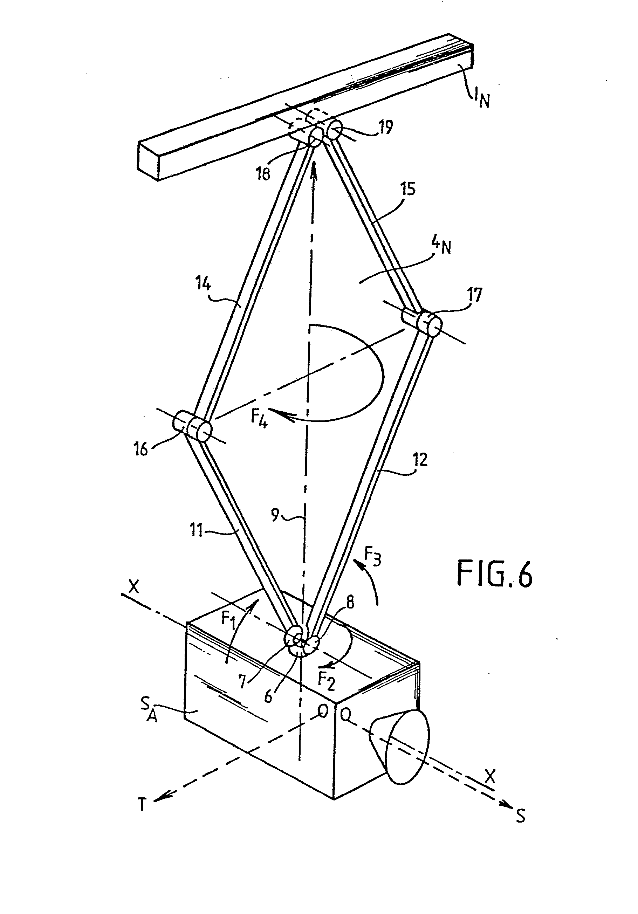

On se référera maintenant aux figures 5 et 6 pour décrire en détail le mécanisme d'éloignement-rotation conforme à l'invention.

Le principe de base du mécanisme d'inversion de mouvement est schématisé sur la figure 3.

Ce mécanisme comprend trois engrenages coniques orthogonaux, à savoir un engrenage central 6 et deux engrenages secondaires identiques 7 et 8.

L'engrenage central 6 est fixe par rapport au satellite SP, jusqu'à l'injection de ce dernier sur l'orbite géostationnaire G. A cet effet, l'engrenage 6 qui est solidaire du système d'orientation 5 des panneaux solaires, est bloqué en position par le verrouillage dudit système d'orientation 5 de façon que le conteneur correspondant, 1N par exemple, soit disposé parallèlement à l'axe longitudinal XX du satellite pour les raisons qui ont été exposées précédemment.

L'axe 9 de l'engrenage 6 est tout à la fois orthogonal à la paroi du satellite SP et perpendiculaire à l'axe commun 10 des deux engrenages secondaires 7 et 8. Chacun de ces derniers est solidaire d'une des premières barres de la structure articulée, à savoir la barre 11 pour l'engrenage 7 et la barre 12 pour l'engrenage 8.

Une pièce de liaison mécanique schématisée en 13 assure la conjugaison des deux engrenages secondaires 7 et 8 par rapport à l'axe 9 de l'engrenage central 6 autour duquel ladite pièce de liaison a un degré de liberté en rotation. Les engrenages secondaires 7 et 8 ont alors nécessairement des rotations de signe inverse.

On voit immédiatement qu'un mouvement de rotation, appliqué par exemple sur la barre 11 dans le sens de la flèche F1, va entraîner une rotation dans le même sens de l'engrenage conique 7 qui roule sans glisser sur l'engrenage central 6 qui est rendu fixe de la paroi du satellite SP. Ladite rotation de l'engrenage 7 entraîne la pièce de conjugaison 13 en rotation dans le sens de la flèche F2 autour de l'axe 9 de l'engrenage fixe 6. Le mouvement de la pièce de conjugaison 13 provoque la rotation de l'engrenage secondaire 8 et, par suite, celle de la barre 12, dans le sens de la flèche F3. Il est apparent que les deux barres 11 et 12 pivotent du même angle mais en sens inverse l'une de l'autre, le mouvement d'ensemble étant symétrique par rapport au plan des axes de la pièce de conjugaison.

Le mécanisme de conjugaison représenté sur la figure 5 permet d'obtenir la rotation dans le sens désiré d'une façon particulièrement simple.

On voit en effet qu'il suffit pour ce faire d'intervertir les positions de départ des barres 11 et 12 pour obtenir une rotation en sens inverse de la pièce de liaison 13. Il est bien entendu que lorsque les bras 11 et 12 ont été amené dans leur position de départ, celle représentée par exemple sur la figure 5, l'ensemble du système est orienté parallèlement à l'axe longitudinal XX du satellite SP, en déverrouillant éventuellement l'engrenage central 6 du système d'orientation 5 des conteneurs de panneaux solaires, le temps nécessaire à la mise en position initiale exacte dudit engrenage central 6 qui doit rester fixe par rapport au satellite jusqu'après la propulsion du satellite en apogée A.

Une représentation de la combinaison du mécanisme ci-dessus avec une structure en forme de parallélogramme articulé est donnée sur la figure 6.

Cette structure est en l'occurrence constituée de quatre barres 11, 12, 14, et 15 articulées entre elles deux à deux suivant des axes d'articulation 16 et 17. Les premières barres 11 et 12 de la structure sont rendues solidaires respectivement des engrenages secondaires 7 et 8, tandis que les secondes barres 14 et 15 supportent le conteneur, 1N par exemple, de panneaux solaires par des axes d'articulation placés côte à côte 18 et 19.

Il y a lieu de noter simplement que sur la figure 6, les positions initiales de départ des barres 11 et 12 sont inversées par rapport à celles de la figure 5, pour les raisons qui ont été exposées précédemment.

D'après le fonctionnement du dispositif qui a été précédemment exposé, les deux premières barres 11 et 12 du parallélogramme ont une ouverture symétrique F1, F3, en même temps qu'une rotation générale F2 autour de l'axe 9 de l'engrenage central 6 du mécanisme; le plan du parallélogramme tourne simultanément autour de ce même axe 9 dans le sens de la flèche F4 qui est le même que F2. Le sommet du parallélogramme se déplace en même temps suivant ledit axe 9.

L'ensemble du mécanisme assure donc simultanément une translation et une rotation suivant ce même axe 9 qui, en l'occurrence, sont appliquées à un conteneur de panneaux solaires.

Le mouvement est provoqué au moment opportun par des ressorts agencés dans les articulations 17 et 19 par example. Ces ressorts agissent pour amener ces articulations en butée. En fin de course, l'effort résiduel desdits ressorts maintient lesdites articulations du parallélogramme en butée et la forme ainsi obtenue est donc stable.

Par ailleurs, il y a lieu de noter que le rapport de l'angle au sommet du cône primitif de l'engrenage principal 6 à l'angle au sommet du cône primitif des engrenages secondaires 7 et 8 donne le rapport de l'angle de rotation d'ensemble, autour de l'axe 9 de l'engrenage principal fixe 6, à l'angle de rotation propre des deux premières barres 11 et 12 de la structure articulée.

Ces rapports sont évidemment déterminés, dans le cas d'application de l'invention à des conteneurs de panneaux solaires, pour que ces conteneurs, au moment de la propulsion en périgée se trouvent disposés parallèlement à l'axe longitudinal XX du satellite et, au moment de la propulsion en apogée se trouvent disposés perpendiculairement à ce même axe longitudinal XX du satellite et à une distance appropriée de ce dernier, les deux conteneurs nord et sud ayant pivoté du même angle droit.

Bien évidement, après que le satellite ait été injecté sur l'orbite géostationnaire à la suite de la propulsion en apogée, l'engrenage principal 6 est déverrouillé de façon que le mécanisme d'orientation 5 puisse alors orienter constamment les panneaux solaires face au soleil.

Le principe que l'on vient de décrire s'applique facilement à une structure articulée composée d'un multiple de deux barres articulées. Dans ce cas, le nombre des engrenages secondaires est égal à la moitié du nombre de barres. Par example, une structure comprenant deux pyramides à base carrée, opposées par la base, est combinée à un mécanisme comprenant quatre engrenages secondaires répartis tous les 90°.

Comme on l'a vu, le dispositif conforme à l'invention en permettant de répondre, d'une façon particulièrement simple, au problème de réaliser simultanément un mouvement de translation et un mouvement de rotation.

Le dispositif conforme à l'invention peut s'appliquer dans le domaine des télémanipulateurs. Plus particulièrement, dans le domaine spatial, il peut être appliqué pour assurer l'éloignement d'un équipement quelconque sur un engin spatial et, notamment, d'un générateur solaire.

Dans cette dernière application, le dépliement total ou partiel des panneaux solaires permet d'utiliser la chaîne d'asservissement en direction prévue pour l'orbite géostationnaire du satellite, grâce à l'augmentation déjà importante des moments d'inertie produite par l'écartement-rotation des conteneurs.

**Revendications**

1. Dispositif permettant d'assurer simultanément l'éloignement et la rotation d'un élément par rapport à un support, notamment l'éloignement et l'orientation d'un équipement sur un engin spatial, caractérisé par la combinaison d'un mécanisme de conjugaison à engrenages coniques (6, 7, 8) dont l'engrenage central (6) peut être rendu solidaire du support (SP), avec une structure déformable (4N) reliant ledit élément (1N) au mécanisme de conjugaison, ladite structure déformable étant constituée d'au moins deux groupes de deux barres articulées (11, 12, 14, 15) et disposées de manière à former un ensemble d'au moins deux pyramides opposées par leurs bases, ledit mécanisme occupant le sommet de la pyramide proche du support et chacune des barres aboutissant audit mécanisme étant solidaire d'un engrenage conique secondaire (7, 8), ces engrenages secondaires étant reliés entre eux par une pièce de liaison mécanique (13) en sorte de pouvoir rouler ensemble sur l'engrenage central (6) autour de l'axe (9) de ce dernier.

2. Dispositif selon la revendication 1, caractérisé en ce que la structure déformable a la forme d'un quadrilatère plan délimité par deux couples de barres articulées (11, 12, 14, 15) liés à deux engrenages coniques secondaires (7, 8).

3. Dispositif selon la revendication 2, caractérisé en ce que les trois engrenages coniques (6, 7, 8) sont orthogonaux et que l'axe (9) de l'engrenage central (6) est orthogonal audit support.

4. Dispositif selon l'une quelconque des revendications 1 à 3, caractérisé en ce que les différents rapports entre les engrenages (6, 7, 8) sont déterminés de façon que le dispositif assure le transfert d'un conteneur (1N) de panneau solaire, d'une position de départ parallèle à l'axe longitudinal (XX) du satellite (SP) et contre ce dernier jusqu'à une position d'arrivée perpendiculaire à l'axe (XX) dudit satellite (SA) et à une distance d'éloignement de ce dernier suffisante pour éviter les ombres portées, le transfert du conteneur ayant lieu entre les moments de propulsion de périgée (P) et de propulsion d'apogée (A) du satellite.

5. Satellite équipé d'au moins un dispositif permettant d'assurer simultanément l'éloignement et la rotation d'un conteneur (1N) de panneau solaire, selon la revendication 4, caractérisé en ce que les inerties développées lors de l'opération de transfert du conteneur permettent d'utiliser pour le contrôle d'attitude du satellite la chaîne d'asservissement prévue pour le contrôle en orbite géostationnaire.

**Patentansprüche**

1. Vorrichtung, die gleichzeitige Translation und Rotation eines Elementes bezüglich eines Trägers sicherstellt, insbesondere die Spreizung und Ausrichtung einer Ausrüstung eines Raumflugkörpers, gekennzeichnet durch die Kombination eines Verbindungsmechanismus mit Kegelzahnrädern (6, 7, 8), dessen zentrales Zahnrad (6) fest verbunden mit dem Träger (SP) sein kann, mit einer verformbaren Struktur (4N), die das Element (1N) mit dem Verbindungsmechanimus verbindet, wobei die verformbare Struktur aus mindestens zwei Gruppen von zwei Gelenkstäben (11, 12, 14, 15) gebildet und in solcher Weise angeordnet ist, daß eine Anordnung von mindestens zwei an ihren Grundseiten aneinandergesetzten Pyramiden gebildet ist, wobei der Mechanismus die Spitze der trägernahen Pyramide einnimmt und jeder der Stäbe an dem Mechanismus anliegend ein mit ihm fest verbundenes sekundäres Kegelzahnrad (7, 8) enthält, wobei die sekundären Zahnräder miteinander durch ein mechanisches Verbindungsstück (13) verbunden sind derart, daß sie zusammen an dem zentralen Zahnrad (6) um dessen Achse (9) abrollen können.

2. Vorrichtung nach Anspruch 1, dadurch gekennzeichnet, daß die verformbare Struktur die Form eines ebenen, durch zwei Paare von mit zwei sekundären Kegelzahnrädern (7, 8) verbundenen Gelenkstäben (11, 12, 14, 15) begrenzten Viereckes besitzt.

3. Vorrichtung nach Anspruch 2, dadurch gekennzeichnet, daß die drei Kegelzahnräder (6, 7, 8) rechtwinklig sind und daß die Achse (9) des zentralen Zahnrades (6) senkrecht auf dem Träger steht.

4. Vorrichtung nach einem der Ansprüche 1 bis 3, dadurch gekennzeichnet, daß die verschiedenen Verhältnisse zwischen den Zahnrädern (6, 7, 8) in der Art bestimmt sind, daß die Vorrichtung die Überführung eines Behälters (1N) für ein Sonnenpaneel von einer Ausgangsstellung parallel zur Längsachse (XX) des Satelliten (SP), an diesen angelegt, bis zu einer Endstellung senkrecht zu der Achse (XX) des Satelliten (SA) und mit einem Spreizabstand des letzteren sicherstellt, der zum Vermeiden der Schlagschatten ausreicht, wobei die Übertragung des Behälters ausgeführt wird zwischen den Zeiten des Antriebs im Perigäum (P) und dem Antrieb im Apogäum (A) des Satelliten.

5. Satellit, austerüstet mit mindestens einer Vorrichtung, die das gleichzeitige Sicherstellen der Spreizung und der Drehung eines Behälters (1N) für ein Sonnenpaneel erlaubt, nach Anspruch 4, dadurch gekennzeichnet, daß die durch den Übertragungsvorgang des Behälters entwickelten Trägheitskräfte die Benutzung der zur Steuerung in dem geostationären Umlauf vorgesehenen Steuerkette für die Höhensteuerung des Satelliten erlauben.

**Claims**

1. A device for simultaneously ensuring removal and rotation of an element relative to a support, in particular removal and orientation of an equipment on spacecraft, characterized by the combination of a conjugation mechanism with conical gears (6, 7, 8), the central gear (6) of which can be made integral with the support (SP), with a deformable structure (4N) connecting said element (1N) to the conjugation mechanism, said deformable structure consisting of at least two groups of two hingedly connected bars (11, 12, 14, 15) disposed so as to form an assembly of at least two pyramids opposed by their bases, said mechanism taking up the summit of that pyramid close to the support and each of the bars that comes to the mechanism being linked with a secondary conical gear (7, 8), such secondary gears being connected to one another through a mechanical connecting part (13) so as to able to roll together on the central gear (6) about the axis (9) of the latter.

2. A device according to claim 1, characterized in that the deformable structure has the shape of a planar quadrilateral delimited by two couples of hingedly connected bars (11, 12, 14, 15) connected to two secondary conical gears (7, 8).

3. A device according to claim 2, characterized in that the three conical gears (6, 7, 8) are orthogonal and in that the axis (9) of the central gear (6) is orthogonal relative to said support.

4. A device according to any one of claims 1 to 3, characterized in that the different ratios between the gears (6, 7, 8) are determined so that the device provides for transfer of a solar panel container (1N), from a starting position parallel to the longitudinal axis (XX) of the satellite (SP) and against the latter up to a position of arrival perpendicular to the axis (XX) of said satellite (SA) and at a distance removed from the latter sufficiently for avoiding carried away shadows, the transfer of the container occurring between the times of perigee propulsion (P) and of apogee propulsion (A).

5. A satellite equipped with at least one device for ensuring simultaneously removal and rotation of a solar panel container (1N) according to claim 4, characterized in that the inertiae developped upon the container transfer operation permit to use, for monitoring the satellite attitude, the servo-control unit provided for geostationary orbit monitoring.

FIG. 1

FIG. 2

FIG. 3

FIG. 5

FIG. 4

FIG.6